# EUROPEAN PATENT APPLICATION

(11) **EP 1 918 693 A1**
(43) Date of publication of application: **07.05.2008**
(21) Application number: 07119646.3
(22) Date of filing: 30.10.2007
(51) Int. Cl.: G01N 21/55, G01N 21/77

(54) **Optical waveguide sensor devices and methods for making and using them**

(30) Priority: 31.10.2006 US 863766 P; 26.10.2007 US 925105
(71) Applicant: Honeywell International, Inc., Morristown, NJ 07962 (US)
(72) Inventor: Keyser, Thomas, Plymouth, MN 55446 (US); Peczalski, Andrzej, Eden Prairie, MN 55347 (US)
(74) Representative: Buckley, Guy Julian

(57) **Abstract**

The present invention provides optical waveguide devices having void regions formed in their substrates, as well as methods for making and using them. For example, one embodiment of the invention is an optical waveguide sensor device, comprising a substrate; a device layer disposed on upper surface of the substrate, the device layer comprising one or more sensing optical waveguides, each sensing optical waveguide having a sensing region; wherein the substrate has one or more void regions in registration with the sensing regions of the sensing optical waveguides in which substantially no substrate material exists, and wherein each void region is optically coupled to the sensing regions of the sensing optical waveguides in registration therewith.

## Description

### CROSS-REFERENCE TO RELATED APPLICATIONS

This application claims priority to U.S. Provisional Patent Application Serial No. 60/863,766, filed October 31, 2006, which is hereby incorporated herein by reference.

### BACKGROUND OF THE INVENTION

### 1. Field of the Invention

The present invention relates generally to sensor devices. The present invention relates more particularly to optical waveguide-based sensor devices suitable for use as chemical and biochemical sensors.

### 2. Technical Background

The modern world is replete with chemical and biochemical threats to the health and safety of its people. Substances such as explosives, nerve agents and poisons, and organisms such as anthrax and botulism have been implicated in warfare and terrorism. Food and water can be contaminated with microbes such as salmonella, coliform and E. coli and a wide variety of chemicals. Even the environment itself is polluted with the detritus of over a hundred years of industrial society. Accordingly, a need has arisen for the accurate sensing and monitoring of chemical and biochemical agents.

Many types of sensors have been developed to detect a variety of chemical and biochemical agents. A very common current method of sensing and monitoring chemical agents is mass spectrometry. This method typically uses relatively large monitored equipment that is not amenable to situations where portable monitoring devices are needed. For example, mass spectrometers are commonly used in an airport setting where items passing through security may be swabbed and the presence of controlled or banned substances is sensed. The mass spectrometer used is typically a permanent or semi-permanent sensing unit and is monitored by security personnel. Mass spectrometer-based systems are also difficult to use in distributed and in-process sensing applications.

Of growing interest is the use of optical sensing devices to sense and monitor chemical and biochemical agents of interest. Many examples of such devices rely on the interaction of an optical signal propagating within an optical waveguide with the environment surrounding the waveguide. However, current waveguide-based devices often lack sensitivity sufficient to detect very low levels of chemical and biochemical agents.
Moreover, many current optical waveguide-based devices are difficult to fabricate, assemble, and integrate together with electronic devices, and suffer from relatively large size.

### SUMMARY OF THE INVENTION

One aspect of the present invention is an optical waveguide sensor device comprising a substrate; a device layer disposed on upper surface of the substrate, the device layer comprising one or more sensing optical waveguides, each sensing optical waveguide having a sensing region; wherein the substrate has one or more void regions in registration with the sensing regions of the sensing optical waveguides in which substantially no substrate material exists, and wherein each void region is optically coupled to the sensing regions of the sensing optical waveguides in registration therewith.

Another aspect of the invention is a method of making an optical waveguide sensor device, comprising providing a substrate; forming a device layer comprising one or more sensing optical waveguides on the substrate, each sensing optical waveguide having a sensing region; and forming in the substrate one or more void regions in registration with the sensing regions of the sensing optical waveguides in which substantially no substrate material exists.

Another aspect of the invention is a method of detecting an analyte, comprising
providing an optical waveguide sensor device, comprising a substrate; a device layer disposed on upper surface of the substrate, the device layer comprising one or more sensing optical waveguides, each sensing optical waveguide having a sensing region; wherein the substrate has one or more void regions in registration with the sensing regions of the sensing optical waveguides in which substantially no substrate material exists, and wherein each void region is optically coupled to the sensing regions of the sensing optical waveguides in registration therewith;
passing an optical signal through at least one of the sensing optical waveguides; and
detecting the optical signal after it emerges from the at least one sensing optical waveguide.

The devices and methods of the invention can result in a number of advantages over prior art devices and methods. For example, in certain aspects of the invention, the optical waveguide devices and methods using them can provide higher sensitivity than prior art optical waveguide devices. Moreover, the level of integration achieved in certain aspects of the present invention can allow the fabrication of smaller, more functional and/or less expensive devices than those found in the prior art. For example, in certain aspects of the invention, electronic devices can be integrated above the sensing optical waveguides, with interactions with the analyte occurring from below the sensing optical waveguides.

### BRIEF DESCRIPTION OF THE DRAWINGS

FIG. 1 is a top schematic view of a Mach-Zehnder optical waveguide sensor device according to one embodiment of the invention;

FIG. 2 is a side cross-sectional schematic view of the optical waveguide sensor device of FIG. 1;

FIG. 3 is a side cross-sectional schematic view of an optical waveguide sensor device according to another embodiment of the invention;

FIG. 4 is a side cross-sectional schematic view of an optical waveguide sensor device according to another embodiment of the invention;

FIG. 5 is a side cross-sectional schematic view of an optical waveguide sensor device according to embodiment of the invention that includes a sensing material;

FIG. 6 is a side cross-sectional schematic view of an optical waveguide sensor device according to an embodiment of the invention than includes a base plate;

FIG. 7 is a top schematic view of a ring resonator optical waveguide sensor device according to one embodiment of the invention;

FIG. 8 is a top schematic view of a ring resonator optical waveguide sensor device according to another embodiment of the invention;

FIG. 9 is a side cross-sectional schematic view of the ring resonator optical waveguide sensor device of FIG. 8;

FIG. 10 is a top schematic view of a optical waveguide sensor device configured to perform a relative absorbance measurement according to another embodiment of the invention; and

FIG. 11 is a side cross-sectional view of an optical waveguide sensor device having a superstrate according to another embodiment of the invention.

### DETAILED DESCRIPTION OF THE INVENTION

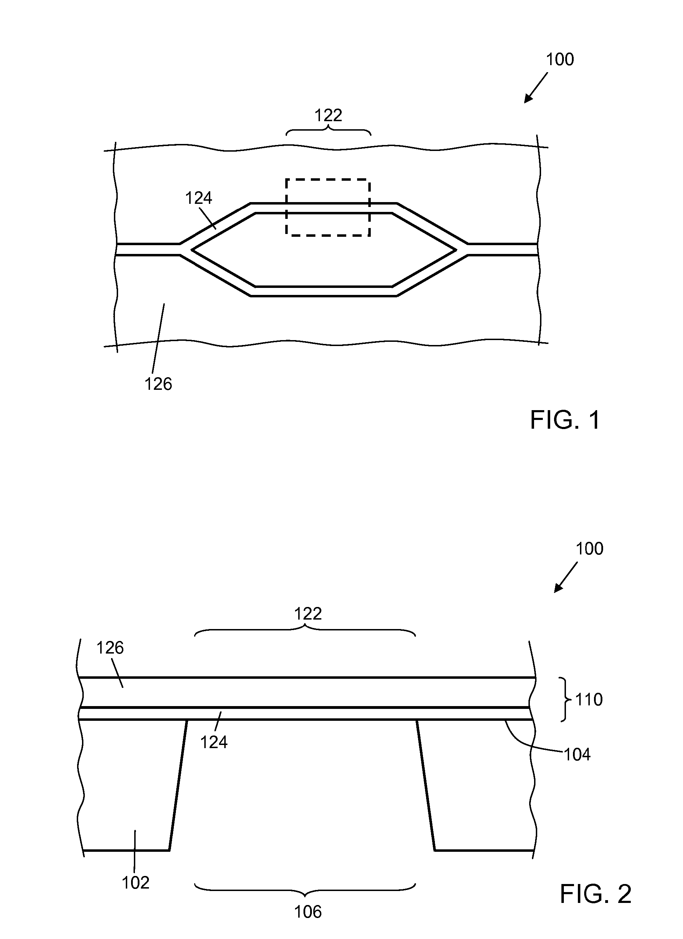

One aspect of the invention is an optical waveguide sensor device. One embodiment of such a device is shown in top schematic view in FIG. 1, and in side cross-sectional schematic view along one Mach-Zehnder waveguide arm in FIG. 2. Optical waveguide sensor 100 includes a substrate 102, and a device layer 110 disposed on the upper surface 104 of the substrate 102. The device layer 110 includes one or more sensing optical waveguides, each having a sensing region 122. The substrate 102 has a void region 106 in registration with the sensing region 122. The void region is a region of the substrate in which the bulk of the substrate material has been removed. The void region is optically coupled (e.g., evanescently coupled) to the sensing region of the sensing optical waveguide; that is, part of the energy of an optical signal transmitted through the sensing region of the sensing optical waveguide interacts with the void region. The embodiment of FIGS. 1 and 2 is configured as a Mach-Zehnder interferometer; the sensing region 122 and the void region 106 are located along one of the waveguide arms. In the embodiment of FIG. 1, the sensing optical waveguide 120 includes core 124 and upper cladding 126; the sensing optical waveguide is clad on its lower side by the substrate 102 and by the void region 106.

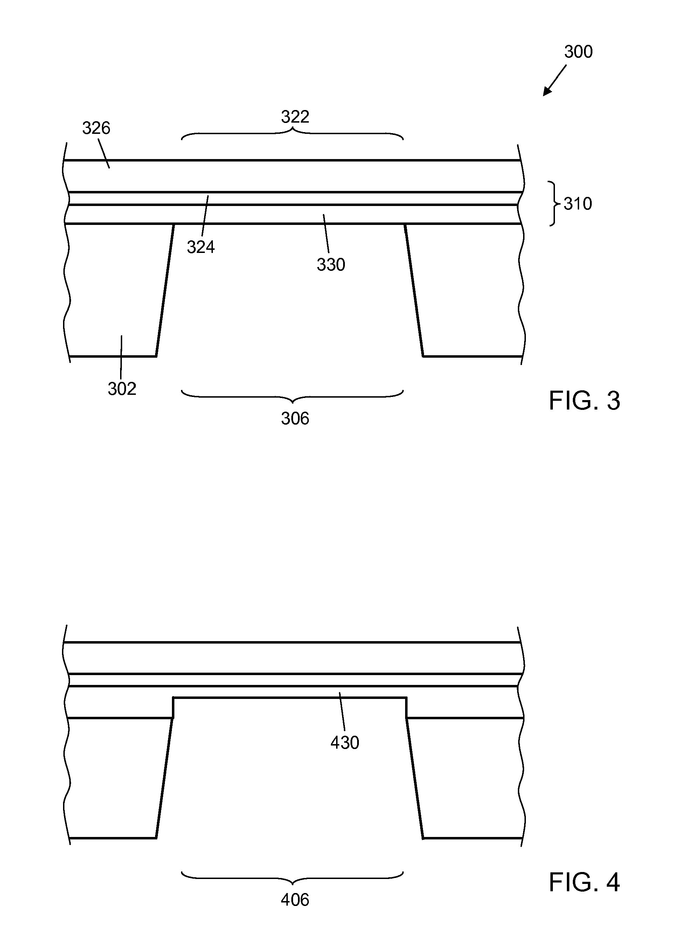

In another embodiment of the invention, shown in cross-sectional view in FIG. 3, a layer of one or more dielectric materials is disposed between the substrate and the device layer. In the optical waveguide sensing device 300 of FIG. 3, a layer of a dielectric material 330 is disposed between the substrate 304 and the device layer 310. The sensing optical waveguide core 324 is clad on its upper side by upper cladding 326, and on its lower side by the layer of dielectric material 330. In the embodiment of FIG. 3, the layer of dielectric material is uniform between the sensing area and the rest of the device, and is thin enough that the void region 306 remains optically coupled to the sensing region 322 of the sensing optical waveguide. However, in other embodiments of the invention, the one or more void regions extend into the layer of one or more dielectric materials. For example, in the embodiment of FIG. 4, void region 406 extends into the layer of dielectric material 430. In such embodiments of the invention, the dielectric material can be thick enough in the area of the substrate so as to optically isolate it from the sensing optical waveguide, but thin enough in the void region so as to allow optical coupling (e.g., evanescent coupling) of the void region to the sensing region of the sensing optical waveguide. In certain embodiments of the invention, the void region extends substantially through the layer of one or more dielectric materials. Depending on the dielectric material and the materials of the sensing optical waveguide, the layer of one or more dielectric materials can have a wide range of thicknesses. For example, the thickness of the layer of one or more dielectric materials can be in the range of 50 nm to 3 µm; or even 100 nm to 1 µm. When the sensing optical waveguide is a silicon waveguide, and the layer of one or more dielectric materials is a layer of SiO₂, it can be on the order of 100-500 nm in thickness. Moreover, the layer of one or more dielectric materials can be a single layer of material (e.g., SiO₂), or can be formed from a number of sublayers of different dielectric materials.

In the embodiments of the invention shown in FIGS. 1-4, air or liquid in the void region can interact with an optical signal guided within the sensing region of the sensing optical waveguide. Certain analytes can absorb the optical signal or perturb the effective refractive index experienced by the optical signal, thereby providing the basis for analytical measurement.

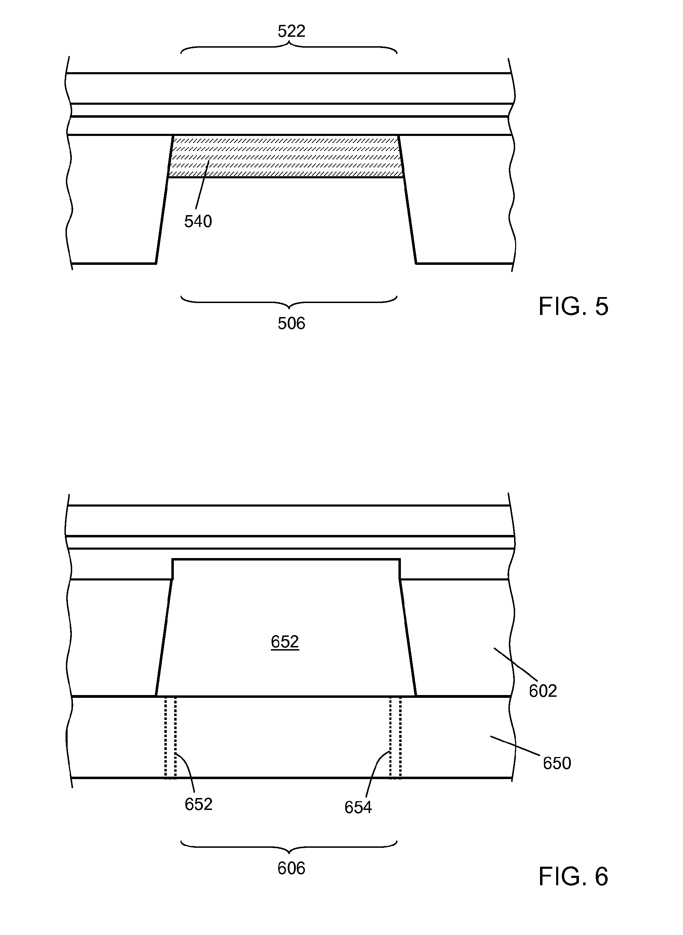

In other embodiments of the invention, however, a sensing material is provided in the void region, and is optically coupled (e.g., evanescently coupled) to the sensing regions of the sensing optical waveguides in registration with that void region. In the embodiment shown in FIG. 5, a sensing material 540 is provided in void region 506 and is optically coupled to the sensing optical waveguide in its sensing region 522. The sensing material can be provided at virtually any thickness. In certain embodiments of the invention, it is thick enough to substantially bury the evanescent wave of an optical signal travelling through the sensing region of the sensing optical waveguide. For example, the sensing material can be in the range of 500 nm to 50 µm in thickness.

The sensing material can be selected to change its optical properties in response to analytes of interest. The sensing material can be, for example, polymeric material, an organic/silicate hybrid material, and a biorecognition layer. Many polymer materials and organic/silicate hybrid materials are known to change their optical properties in response to analytes of interest. For example, polymeric materials change refractive index when exposed to vapors or aqueous solutions of organic analytes such as hydrocarbons, ether and ester-based solvents, and halocarbons. The magnitude of the refractive index change depends on the concentration of the organic analyte and the refractive index difference between the polymer and the analyte. Certain polymeric materials also experience index and/or absorption changes upon interaction of an analyte through electronic interactions with the polymer or a dopant such as an indicator (e.g., a colorimetric indicator). Examples of the use of polymeric materials in chemical sensing are described in G. Gauglitz and J. Ingenhoff, "Integrated optical sensors for halogenated and non-halogenated hydrocarbons," Sensors and Actuators B, 11 (1993) 207-212; A. Ksendozov et al., "Integrated optics ring-resonator chemical sensor with polymer transduction layer," Electronics Letters, 8th January 2004, Vol. 40 No. 1; A. Pyayt et al., "Optical micro-resonator chemical sensor," Proc. of SPIE, vol. 6556, 65561D (2007); H. Hisamoto and K. Suzuki, "Ion-selective optodes: current developments and future prospects," Trends in Analytical Chemistry, 18 (1999) 513-524; and D.P. Campbell et al., "Polymers: The Key Ingredient in Waveguide Chemical Sensors," Polymer Preprints, August 1998, p. 1085, each of which is hereby incorporated herein by reference. Organic/silicate hybrid materials include organically-modified silicate materials (e.g., the condensation reaction products of trialkoxysilanes) as well as porous silicates doped with organic or biomolecular species that interact with an analyte of interest. Examples of the use of organic/silicate hybrid materials in sensing applications are described in, for example, B.D. MacCraith et al., "Sol-gel coatings for optical chemical sensors and biosensors," Sensors and Actuators B, 29 (1995) 51-57; B.D. MacCraith et al., "Optical Chemical Sensors based on Sol-Gel Materials: Recent Advances and Critical Issues," Chemistry and Materials Science, 8 (1997) 1053-1061; U.S. Patent 5,774,603; and U.S. Patent Application Publication no. 2007/0059211; E.L. Chronister, "Ultrafast photochromic sol-gel glasses & fiber optic sensors," Final Report, Grant No. DAAL03-92-G-0399, Accession No. ADA332537, August 18, 1997, each of which is hereby incorporated herein by reference. Biorecognition layers change their optical properties upon interaction with a biological species (e.g., a protein, nucleic acid, cell, enzyme substrate). For example, biorecognition layers based on ELISA, nucleic acid binding, colorimetric detection of enzyme reaction products are known and can be adapted for use in the present invention.

The substrate can be any substrate suitable for use in optical waveguide devices. For example, the substrate can be a silicon substrate. When the substrate is a silicon substrate, the one or more void regions can be formed by a process involving anisotropic wet etching of the silicon substrate. In other embodiments of the invention, the substrate is a glass substrate, or a plastic substrate. In one embodiment of the invention, the substrate, the layer of dielectric material and the device layer are formed from a silicon-on-insulator structure. For example, in the embodiment shown in FIG. 3, the substrate 302 can be the silicon wafer of a silicon-on-insulator substrate, the layer of one or more dielectric materials 330 can be its silicon oxide or silicon oxynitride buffer layer, and the sensing optical waveguides cores 324 can be formed from its silicon layer. In the embodiment shown in FIG. 3, the buffer layer serves as the lower cladding of the sensing optical waveguides.

The sensing optical waveguides can be made from virtually any material system. For example, the sensing optical waveguides can have a core made from silicon, silicon nitride, silicon oxynitride, or a silicon dioxide based material (e.g., doped or undoped SiO₂). Other materials, such as III-IV semiconductors, can be used to form the cores of the inert inorganic optical waveguides. The sensing optical waveguide can have upper and lower claddings made from any number of materials, including silicon nitride, silicon oxynitride and silicon dioxide-based materials.

In certain embodiments of the invention, the sensing optical waveguides can also be made from a material system that it itself responsive to an analyte. For example, the sensing optical waveguide can have a core that is formed from a polymer material or an organic/silicate hybrid material described above with respect to the void region. The upper cladding of the sensing optical waveguide can also be made from a sensing material (modified to provide the desired refractive index contrast). The upper cladding of the sensing optical waveguide can also be made from an inert polymer material or silicate (e.g., sol-gel derived) material of an appropriate refractive index. When the sensing optical waveguide is made from an analyte-responsive material, it can be combined in a device with inert optical waveguides (e.g., made from the inorganic materials described above). The sensing region of the sensing optical waveguide is optically coupled to the void region of the substrate, as described above with reference to FIG. 1. Different types of waveguides can be butt-coupled, or can be coupled together through tapered or other couplings designed to provide more efficient coupling between them. Inert inorganic optical waveguides can be combined in virtually any combination with sensing optical waveguides to provide a wide variety of optical waveguide sensor devices. By using inert inorganic optical waveguides for a substantial portion of the device, performance issues inhering in the relatively high loss of polymeric or organic/silicate hybrid sensing optical waveguides can be mitigated. Because extremely sensitive polymeric or organic/silicate hybrid materials can be used, the sensing optical waveguides can be quite short. Moreover, precise fabrication techniques can be used to make the sensitive coupling and splitting structures of the device from inert inorganic optical waveguides. Inert inorganic optical waveguides (especially silicon optical waveguides) can also provide relatively tight turning radii, and therefore relatively small devices. Accordingly, combination of inert inorganic optical waveguides and polymeric or organic/silicate sensing optical waveguides can provide advantages over devices formed from inert inorganic optical waveguides or polymeric or organic/silicate sensing optical waveguides alone.

In other embodiments of the invention, the sensing optical waveguide is made from a material system, such as silicon dioxide or silicon oxynitride, with a relatively low refractive index (e.g., less than 2.0 in the visible and near-infrared), while the inert optical waveguides are made from silicon. Use of relatively low refractive index sensing optical waveguides can allow higher sensitivity, as more of the optical signal is in the evanescent wave. Coupling of these sensing waveguides with silicon waveguides (e.g., through tapered couplings) can allow the construction of relatively small, low-loss devices that nonetheless have desirably high sensitivity.

The device layer is disposed on the upper surface of the substrate. The device layer 110 can be disposed directly on the upper surface 104 of the substrate 102, as shown in FIG. 1. Alternatively, one or more intermediate layers can be disposed between the device layer and the upper surface of the substrate. In certain embodiments of the invention, however, the device layer is within 10 microns, or even within 3 µm of the upper surface of the substrate. As described below, the device layer can include waveguides in one or more horizontal planes with respect to the substrate surface.

In another embodiment of the invention, the optical waveguide sensor device further comprises a base plate disposed below the substrate and defining one or more substantially closed sensing cells with the one or more void regions. For example, in the embodiment shown in FIG. 6, optical waveguide sensor device 600 includes base plate 650 disposed below substrate 602. A substantially closed sensing cell 652 is created from the base plate and the void region 606. The base plate can include, for example, an inlet hole 654 and an outlet hole 656, so that a sample can be flowed through the substantially closed sensing cell.

The optical waveguide sensor device shown in FIG. 1 is configured as a Mach-Zehnder interferometer, which senses the relative change in the difference between the effective refractive indices of its two arms. In the device of FIG. 1, one arm of the interferometer has a void region optically coupled to it, and the other does not. Index changes due to temperature fluctuations will be experienced equally by both arms of the interferometer, and effectively canceled out. Index changes due to interaction with the analyte will only be experienced in the sensing optical waveguide that is exposed to the void region. In other embodiments of the invention, both arms of the interferometer are exposed to a void region. For example, one of the void regions can a sensing material disposed in it, while the other does not. Only the arm of the interferometer coupled to the void region with the sensing material will experience a large index change due to interaction with analyte; the other arm will not respond to the analyte, but will respond similarly to fluctuations in temperature. In an alternative embodiment of the invention, one of the void regions has an indicator-doped polymer, while the other material has undoped polymer in it. The indicator-doped polymer will respond to the analyte, but both arms will respond similarly to temperature and interferent species, thus cancelling their effect on the measurement.

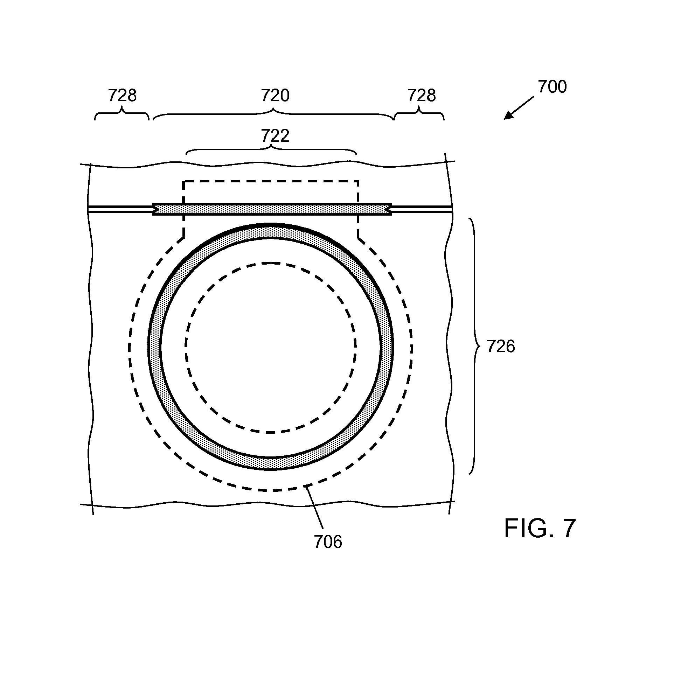

The optical waveguide sensor device can have a variety of architectures. For example, as described above, the optical waveguide sensor device can have a Mach-Zehnder interferometer architecture. In one embodiment of the invention, shown in top schematic view in FIG. 7, the optical waveguide sensor device has a ring resonator configuration. Optical waveguide sensor device 700 includes a straight sensing optical waveguide 720 and a ring sensing optical waveguide 726. Straight sensing optical waveguide 720 has a sensing region 722; all of ring sensing optical waveguide 726 is a sensing region. The sensing optical waveguides are formed from a doped silicon dioxide material system, and have a relatively low (~1%) index contrast. The straight sensing optical waveguide 720 is coupled through tapers to inert optical waveguides 728, which are formed from silicon, to lead an optical signal to and from the sensing part of the device. Ring sensing optical waveguide 726 is the ring resonator, to which straight sensing optical waveguide 720 is optically coupled. Void region 706 is optically coupled to the sensing region 722 of the straight optical waveguide 720 and the ring sensing optical waveguide 726, allowing them to interact with an analyte, with or without a sensing material.

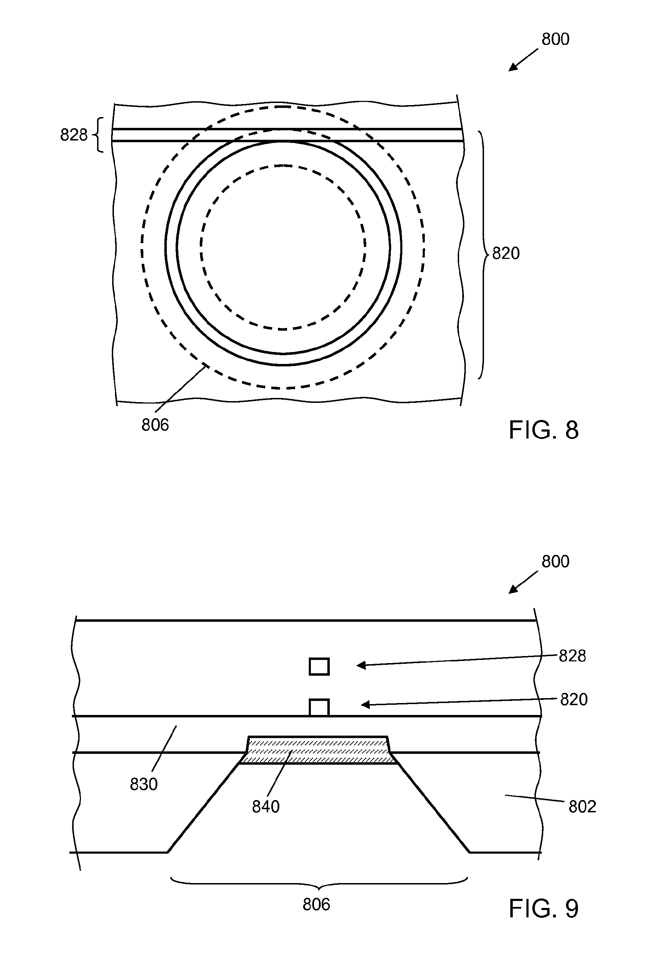

In certain embodiments of the invention, a sensing optical waveguide is formed in a different horizontal plane (i.e., with respect to the substrate) than inert inorganic optical waveguide(s). In such embodiments, the coupling between the sensing optical waveguide and the inert inorganic optical waveguide can be evanescent in nature. For example, in the optical waveguide sensor device 800 shown in top schematic view in FIG. 8 and in end-on cross-sectional schematic view in FIG. 9, the optical waveguide sensor device 800 is configured as a ring resonator in which the ring is formed from the sensing optical waveguide 820 and the inert optical waveguide 828 is coupled thereto. The sensing optical waveguide and inert optical waveguide can be made from the same materials, such as silicon; or from different materials, such as silicon dioxide and silicon, respectively. The inert optical waveguide 828 is formed above the sensing optical waveguide 820. Void region 806 is formed in substrate 802, and penetrates into the layer of dielectric material 830. A sensing material 840 is disposed in the void region 806 and is optically coupled to sensing optical waveguide 820.

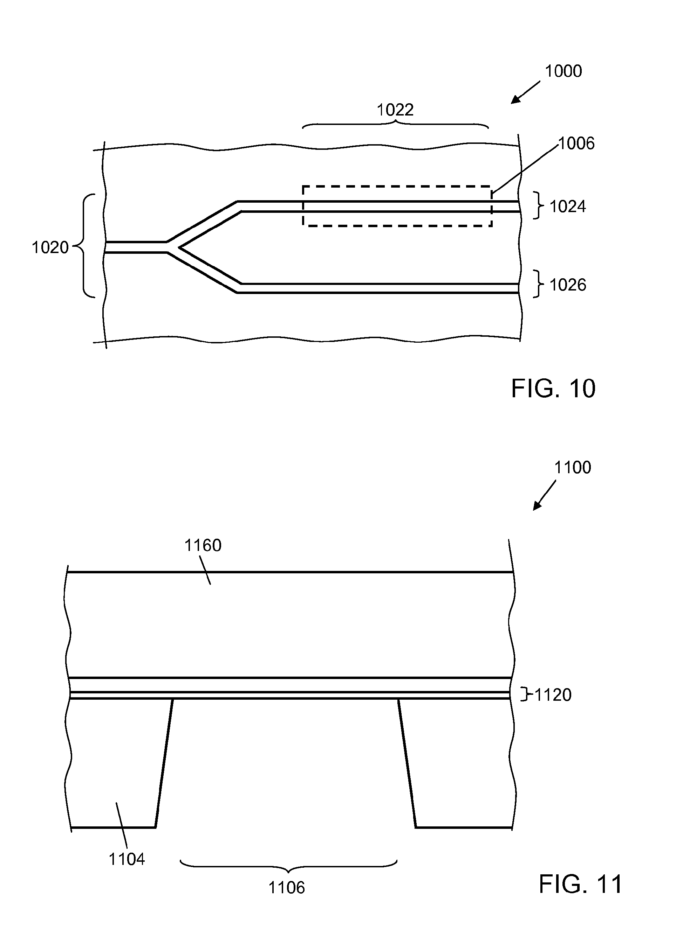

In other embodiments of the invention, the optical waveguide sensor device is configured to provide a relative absorption measurement. For example, in the optical waveguide sensor device 1000 shown in top schematic view in FIG. 10, the sensing optical waveguide 1020 splits into two arms 1024 and 1026. Arm 1024 has a sensing region 1022, which is coupled to void region 1006. When light-absorbing or light-scattering material enters the void region 1006, the optical signal propagating through arm 1024 is decreased in intensity. The optical signal propagating in arm 1026 can be monitored to provide a reference for cancellation of intensity changes due to drift in the optical source or changes in input coupling efficiency.

In another embodiment of the invention, the optical waveguide sensor device further comprises a superstrate affixed above the sensing optical waveguides. For example, in the embodiment of FIG. 1100, superstrate 1160 is affixed above the sensing optical waveguides 1120. Use of a superstrate according to this embodiment of the invention can provide additional mechanical strength to the optical waveguide sensor device, especially in the area of the void region 1106 of the substrate 1104, and can provide a surface for mounting and other physical operations. However, in other embodiments of the invention, the optical waveguide sensor device lacks a superstrate affixed above the sensing optical waveguides.

According to one embodiment of the invention, the device layer of the optical waveguide sensor device also includes one or more electronic devices. The electronic devices can be operatively coupled to the sensing optical waveguides, both directly or through the intermediacy of one or more inert optical waveguides. The electronic devices can also be operatively coupled to one or more of inert optical waveguides. For example, an optical detector can be included in the device layer. Silicon and/or germanium optical detectors can be especially useful when visible or near-infrared light is used in the optical waveguide sensor device. In other embodiments of the invention, the device layer includes a modulator coupled to at least one of the inert optical waveguides and/or one of the sensing optical waveguides. A silicon-on-insulator substrate can be used to allow silicon-based electronic devices to be built onto the device; when none of the optical waveguides of the device are to be formed from silicon, the silicon layer of the silicon-on-insulator structure can be etched away to leave the insulator layer as a platform for making the optical waveguides. Electronic devices that can be used in the devices of the present invention include, for example, amplifiers, signal conditioning and interfacing circuits, and optoelectronic devices such as detectors, phase modulators and switches. Electronic devices can be in a plane above the sensing optical waveguides; even in such embodiments, sensing can occur because the interaction between the analyte and the sensing optical waveguides occurs from the underside of the device, through the void space in the substrate.

The optical waveguide sensor devices of the present invention can also include an optical source operatively coupled to the sensing optical waveguide (e.g., directly or through an inert optical waveguide). The optical source provides an optical signal used to interrogate the waveguide structure. It can be provided through an optical fiber, or coupled into one of the waveguides using a prism, a grating or a lens, or through butt-coupling. The optical source can be of a wavelength or wavelength range that overlaps with the responsive wavelengths of the sensing optical waveguide (i.e., the wavelengths over which the sensing optical waveguide changes its optical properties in response to an analyte), and can for example operate in the visible, near-infrared or infrared wavelength ranges. The optical source can be, for example, a laser (e.g., a fixed-wavelength laser or a scanning laser), or a broadband light source.

The optical waveguide sensor devices of the present invention can also include an optical detector operatively coupled to the sensing optical waveguide (e.g., directly or through an inert optical waveguide). As described above, in certain embodiments of the invention the detector is provided in the device layer itself. In other embodiments of the invention, the detector is provided in a discrete device or on a discrete chip. The detector can operate at a fixed wavelength or wavelength range, or scan through wavelengths to provide spectrographic information. Similarly, a detector array can be used with a grating or prism to provide spectrographic information, or to monitor specific spectral regions. The detector can be coupled to the waveguides of the device through an optical fiber, a prism or a grating, or through butt-coupling.

The optical waveguide sensor devices of the present invention can include multiple sensing optical waveguides and/or multiple void regions. The multiple void regions can have different sensing materials disposed therein. The use of multiple sensing optical waveguides and/or multiple sensing materials in parallel can allow interferent signals to be accounted for, or can allow for the simultaneous sensing of many different analytes.

Another aspect of the invention is a method of making an optical waveguide sensor device. The method includes providing a substrate, and forming one or more sensing optical waveguides on the substrate. Each sensing optical waveguide has a sensing region, as described above. The method further includes forming in the substrate one or more void regions in registration with the sensing regions of the sensing optical waveguides. In the void regions, substantially no substrate material exists. Standard integrated optics fabrication techniques can be used to make the sensing optical waveguides. Vapor deposition, photolithographic, etching, lift-off and related techniques can be used to make waveguides from silicon, silicon oxide materials, silicon nitride and silicon oxynitride materials. These standard techniques can also be used to make waveguides from polymeric and organic/silicate hybrid materials. Photolithographic methods, such as those described in U.S. Patent 7,011,932, can also be used to make sensing optical waveguides from polymeric materials. The void regions can be made from any combination of reactive ion etching, wet etching, physical processes such as grinding and micromachining. When the substrate is formed from silicon, anisotropic wet etching can be used to form the void regions. The methods according to this aspect of the invention can be used to make the optical waveguide sensor devices described above.

In one embodiment of the invention, the method further includes providing a sensing material in at least one void region. The sensing materials can be those described hereinabove, and can be deposited using a variety of methods, including deposition from solution, using sol-gel methods, using reactive curing methods, silane based coupling.

In one embodiment of the invention, the method further includes, before forming the one or more sensing optical waveguides, forming a layer of one or more dielectric materials on the substrate. The layer of one or more dielectric materials is disposed between the substrate and the device layer. Standard semiconductor fabrication methods, such as CVD, can be used to make the layer of one or more dielectric materials.

In one embodiment of the invention, forming the device layer includes forming one or more electronic devices in the device layer. A silicon-on-insulator substrate can be used to form the substrate and electronic devices. Standard integrated electronic device fabrication methods, such as ion implantation, physical and chemical deposition, chemical-mechanical polishing and patterning techniques, can be used to make the electronic devices.

Another aspect of the invention is a method of detecting an analyte. The method comprises providing an optical waveguide sensor device as described above. The method further includes passing an optical signal through at least one of the sensing optical waveguides. The optical signal is within a wavelength range that overlaps the responsive wavelengths of the one or more sensing optical waveguides. The optical signal can be provided by using an optical source as described above with respect to the optical waveguide sensor devices of the present invention. The method also includes detecting the optical signal after it emerges from the at least one sensing optical waveguide. The detectors described above with respect to the optical waveguide sensor devices of the present invention can be used to detect the optical signal. Depending on the nature of the optical signal and the configuration of the optical waveguide sensor device, the detected optical signal can take many forms, including a spectrograph, an interferogram, a position on a peak, or a position within a continuum of absorptions. Depending on its character, electronic, software, or manual processing can be used to correlate the detected optical signal with the concentration of the analyte.

Although various specific embodiments of the present invention have been described herein, it is to be understood that the invention is not limited to those precise embodiments and that various changes or modifications can be effected therein by one skilled in the art without departing from the scope of the claimed invention.

## Claims

1. An optical waveguide sensor device, comprising:
a substrate;
a device layer disposed on upper surface of the substrate, the device layer comprising one or more sensing optical waveguides, each sensing optical waveguide having a sensing region;
wherein the substrate has one or more void regions in registration with the sensing regions of the sensing optical waveguides in which substantially no substrate material exists, and
wherein each void region is optically coupled to the sensing regions of the sensing optical waveguides in registration therewith.

2. An optical waveguide sensor device according to claim 1, further comprising a sensing material in the void region, the sensing material being optically coupled to the sensing regions of the sensing optical waveguides in registration therewith

3. The optical waveguide sensor device according to claim 2, wherein the sensing material is selected from the group consisting of a polymeric material, an organic/silicate hybrid material, and a biorecognition layer.

4. The optical waveguide sensor device of claim 1, further comprising a base plate disposed below the substrate and defining one or more substantially closed sensing cells with the one or more void regions.

5. The optical waveguide sensor device of claim 1, further comprising a superstrate affixed above the sensing optical waveguides.

6. The optical waveguide sensor device of claim 1, wherein the device layer further comprises one or more electronic devices.

7. A method of making an optical waveguide sensor device, comprising:
providing a substrate;
forming a device layer comprising one or more sensing optical waveguides on the substrate, each sensing optical waveguide having a sensing region; and
forming in the substrate one or more void regions in registration with the sensing regions of the sensing optical waveguides in which substantially no substrate material exists.

8. The method according to claim 8, further comprising providing a sensing material in at least one void region.

9. The method according to claim 8, further comprising after forming the void regions, affixing a base plate below the substrate, thereby defining one or more channels with the one or more void regions.

10. A method of detecting an analyte, comprising
providing an optical waveguide sensor device, comprising:
a substrate;
a device layer disposed on upper surface of the substrate, the device layer comprising
one or more sensing optical waveguides, each sensing optical waveguide having a sensing region;
wherein the substrate has one or more void regions in registration with the sensing regions of the sensing optical waveguides in which substantially no substrate material exists, and
wherein each void region is optically coupled to the sensing regions of the sensing optical waveguides in registration therewith;
passing an optical signal through at least one of the sensing optical waveguides; and detecting the optical signal after it emerges from the at least one sensing optical waveguide.
